# EUROPEAN PATENT SPECIFICATION

(11) **EP 4 551 380 B1**
(45) Date of publication and mention of the grant of the patent: **30.09.2026**
(21) Application number: 23757960.2
(22) Date of filing: 23.08.2023
(51) Int. Cl.: B29C 65/48, B29C 65/78, B29C 35/02, B29C 35/04, B29L 31/08, B29C 35/16

(54) **METHOD FOR JOINING AT LEAST TWO SECTIONS OF A WIND TURBINE BLADE USING AN AIR HEATER DEVICE**
VERFAHREN ZUM VERBINDEN VON MINDESTENS ZWEI ABSCHNITTEN EINER WINDTURBINENSCHAUFEL UNTER VERWENDUNG EINER LUFTHEIZVORRICHTUNG
PROCÉDÉ D'ASSEMBLAGE D'AU MOINS DEUX SECTIONS D'UNE PALE D'ÉOLIENNE À L'AIDE D'UN DISPOSITIF DE CHAUFFAGE DE L'AIR

(30) Priority: 01.09.2022 EP 22193508
(43) Date of publication of application: 14.05.2025
(73) Proprietor: Siemens Gamesa Renewable Energy A/S, 7330 Brande (DK)
(72) Inventor: MIMO, Matteo, 9530 Støvring (DK)
(74) Representative: SGRE-Association
(86) International application number: PCT/EP2023/073142
(87) International publication number: WO 2024/046846

(56) References cited:
- EP-A1- 2 368 699
- US-A1- 2018 171 968
- US-A1- 2018 319 046
- US-A1- 2020 124 028

## Description

Method for joining at least two sections of a wind turbine blade, use of an air heater device in a method for joining at least two sections of a wind turbine blade and use of an external heater in a method for joining at least two sections of a wind turbine blade

The present invention relates to a method for joining at least two sections of a wind turbine blade, a use of an air heater device in a method for joining at least two sections of a wind turbine blade and a use of an external heater in a method for joining at least two sections of a wind turbine blade.

Wind turbine blades, especially for offshore use, continuously increase in size with the evolvement of technology. Regarding the main dimensions current blades can reach a root diameter of approximately 5 m, a blade length of over 100 m while typical chord lengths can reach up to 7 m.

As the dimensions of the blades are literally tremendous the production of wind turbine blades often involves pre-manufacturing of blade sections that are joined together in subsequent production steps. These blades are commonly called "split blades". Wind turbine blades manufactured according to this approach can be split longitudinally and/or angularly so that the finished blade comprises at least two blade sections.

WO 2020/244902 A1 discloses a method for manufacturing a wind turbine blade from at least two longitudinally split blade sections. To connect the two blade sections a joining adapter comprising a fiber layup is arranged inside the two blade sections between joining interfaces on either side so that it overlaps at least partially with both the first and the second blade section. In the region of their joining interfaces the blade sections are tapered on the inside, wherein the joining adapter is correspondingly tapered on the outside to mate with the inside tapered joining interfaces of the blade sections. In a subsequent step, the joining region is tightly sealed with vacuum bags both on the outside and the inside of the blade and the joining region is evacuated. Subsequently, a curable resin is injected into the evacuated joining region. The curable resin penetrates into the fiber structure of the fiber layup of the joining adapter and to adjacent fibers at the joining interfaces of both blade sections. The curable resin then cures under an exothermic reaction.

WO 2021/073842 A1 discloses another method for assembling blade parts of a wind turbine blade, wherein the method includes a customization and/or custom selection of a suitable joining adapter based on the individual geometry of the joining interfaces of the first and second blade sections.

A further method for manufacturing a wind turbine blade from at least two angularly and/or longitudinally split blade sections is disclosed in EP 3 907 062 A1.

Curing of the curable resin is a crucial step in all of the above methods, which however has not been addressed in all detail so far and exhibits potential for improvement.

The curable resin used in above methods typically consists of an epoxy and a hardener that are mixed upon injection into the evacuated joining region. The curing happens essentially in three stages: liquid, gel and solid. In the liquid stage, hardener and epoxy are mixed, during this stage the epoxy-hardener-mixture is within the so called "cure time" in that it still remains a liquid and is processable. In the gel stage, the epoxy-hardener-mixture passes into an initial cure phase and begins to gel. In the solid stage, the epoxy-hardener-mixture has cured to a solid state, i.e. the epoxy has reached most of its final mechanical properties.

The epoxy cures under an exothermic reaction during which the molecules in the epoxy-hardener mixture react and generate heat. The amount of heat generated by said exothermic reaction depends on the thickness of the epoxy layer, wherein thicker layers generate more heat.

In general, higher temperatures accelerate the curing of the epoxy.

In practice at least three factors contribute to a quick curing reaction of the epoxy: The ambient temperature, the temperature of the surface to that the epoxy is applied and the heat generated by the epoxy as it cures.

In the manufacturing of wind turbine blades, components of the blade sections that neighbor the joining region act as thermal masses that "remove" heat from the joining region by conduction. Therefore, currently an optimal curing temperature cannot be ensured throughout the entire joining region.

Additionally, the thickness of the fiber layup in the joining region is not constant but varies both in the longitudinal and angular direction of the blade. While in regions with a relatively thick fiber layup a high volume of epoxy is provided that creates relatively high amounts of heat, in regions with a relatively thin fiber layup only a small volume of epoxy is provided so that the amount of heat generated in those regions is significantly smaller. This can be further detrimental to a uniform curing of the epoxy throughout the entire joining region, wherein especially low epoxy volume regions may suffer from incomplete curing. With longitudinal split blades, typical regions that have a relatively tick fiber layup may especially be located in the spar cap/beam area while a relatively thin fiber layup may be located at longitudinal end sections of the joining region close to the respective inboard/outboard blade sections.

Therefore, additional heat is often supplied to the joining region. This is currently done by placing industrial heating blankets onto an outer surface of the joining region after the curable resin has been injected. This however avoids the above described disadvantages only insufficiently as the thermal masses on the inside of the blade sections, **e.g.** spar caps/beams, joint mandrel and other components "deep" in the structure of the blade sections such as inner/outer shell and/or core materials, cannot be heated to the desired temperature level. In addition, this does address the varying thicknesses of the fiber layup in the joining region so that it can happen that relatively high epoxy volume regions are over-heated while relatively low epoxy volume regions are under-heated.

EP 2 368 699 A1 discloses a further method for joining blade parts of a wind turbine blade that includes heating of spar segments from a hollow inside of the blade with hot air produced by a blower and a heater. In addition, it is disclosed there that heat can also be supplied from the outside of the spar segments, e.g. through heating blankets.

A further method for joining blade parts of a wind turbine blade that involves the use of heating blankets on an outside of a joining zone between two blade parts of a wind turbine blade is disclosed in US 2018/0171968 A1.

Another method for joining blade parts of a wind turbine blade that involves the use of hot air produced by a blower and a heater is disclosed in US 2020/0124028 A1. There, hot air is pumped into the blade's hollow inside at a root side on a first side of a shear web and received as cooled down air at another side of the shear web. The air is guided around the shear web in the hollow inside of the blade, wherein the shear web has one or multiple apertures to allow for a passage of air.

Finally, US 2018/0319046 A1 discloses a method for manufacturing a wind turbine blade using fiber material and curing the latter in a mold. In a curing step, heat is supplied to the laminate structure by temperature-controlled heating blankets that are configured to heat different heating zones with individually controlled heating power.

Therefore, it is one object of the present invention to provide a method for joining at least two sections of a wind turbine blade that is characterized by an improved curing of the curable resin used to join the blade sections

It is an additional object of the invention to provide a use of an air heater device in a method for joining at least two sections of a wind turbine blade.

It is yet a further object of the invention to provide a use of an external heater in a method for joining at least two sections of a wind turbine blade.

Accordingly, a method for joining at least two sections of a wind turbine blade is provided.

The method comprises the steps:
a) providing a first blade section and a second blade section, each comprising an inner hollow space;
b) arranging the first and the second blade section so that they adjoin each other in a joining region;
c) sealing the joining region against neighboring regions of the first and second blade sections to create a sealed joining region,
d) evacuating the sealed joining region;
e) injecting a curable resin into the sealed joining region;
f) curing the curable resin by performing at least one heating step comprising applying heat at least to the joining region, wherein the heating step comprises:
   ff) providing an air heater device and with the air heater device supplying a stream of heated air into the inner hollow space of the first and/or second blade sections at least in the joining region.

Directional designations such as "longitudinal" and "radial" herein refer to a shape of the wind turbine blade.

The curable resin may comprise an epoxy and a hardener that are mixed before injection into the sealed joining region.

Heating the inner hollow space(s) of the first and/or second blade section at least in the joining region with the air heater device has the advantage that the thermal masses inside of the blade sections, in particular the shear web, the spar caps/beams and/or a joint mandrel positioned inside of the blade sections in the joining region can be conditioned to a temperature level that assists the curing of the curable resin. Thus, conductive temperature losses can be minimized. This results in an overall improved curing of the curable resin so that a blade joint with higher quality and better mechanical properties is achieved.

In embodiments, the heating step of the method may comprise step fff) placing an external heater on an outer surface of the first and/or second blade sections in the joining region, wherein the external heater comprises a multitude of heating zones, wherein a heating power in the heating zones is individually controlled.

Applying an external heater with a multitude (at least two or more) of individually (i.e., independently) controlled heating zones has the advantage that the local heating power may be adjusted to the local structure of the joining region. For example, it is possible to apply a lower heating power in high epoxy volume regions and a higher heating power in low epoxy volume regions. This helps to compensate for different levels of heat generated by the curing reaction of the curable resin. As a result, complete curing of the curable resin can be assured for low epoxy volume regions while overheating can be avoided for high epoxy volume regions. Concluding, the entire joining region can be temperature controlled in an optimal way that assists the curing of the curable resin in the best possible way.

In embodiments step ff) may be performed as follows: Heating up the inner hollow space with the air heater device at least in the joining region to a temperature level of 90 °C (+/-5°C) and maintaining this temperature level for a predetermined time interval. The predetermined time interval in particular can be between 10 h and 20 h, in particular between 14 h and 18 h.

The step of heating up the inner hollow space may be particularly performed with a ramp up of max. 0.5 °C per minute, so that starting from an ambient temperature of 20 °C the heating up step in embodiments takes around 140 minutes.

The first and second blade sections comprise at least one inner separation wall, in particular a shear web, in particular extending in a longitudinal direction. The at least one inner separation wall defines at least two inner chambers in the inner hollow space of the first and second blade sections. In step ff) at least two separate streams of heated air are supplied to the at least two inner chambers.

The two inner chambers may be particular chambers associated with a leading edge and a trailing edge of the blade sections. The two separate streams of heated air can in particular comprise different properties, e.g be provided with a different temperature level.

According to a further embodiment, the method may comprise step a2) Providing a joining adapter that comprises a first mating zone corresponding to an interface of the first blade section with the joining region and a second mating zone corresponding to an interface of the second blade section with the joining region.

Additionally, the method may comprise step b1) Placing the joining adapter in the joining region between the interfaces of the first and second blade sections.

In particular step a2) may be performed during or after step a) and before step b) and step b1) may be performed before step b).

The joining adapter can in particular be placed inside the first and second blade sections in the joining region. The joining adapter can comprise tapered outer surfaces in its first and second mating zones that correspond to inner tapered surfaces of the first and second blade sections at their joining interfaces. The joining adapter in particular comprises a fiber layup comprising glass, carbon and/or aramid fiber mats. At least at their free edges the fiber mats of the joining adapter can be non-impregnated so that an optimal joining to the respective joining interfaces of the first and second blade sections can be achieved.

In yet another embodiment the method may comprise step f1) Providing at least two sealing plugs and positioning the at least two sealing plugs inside of the first and second blade section at a position neighboring the joining region so that a fluidically closed internal heating chamber is formed around the joining region. In particular step f1) is performed before step f).

By use of the sealing plugs the space that is under influence of the stream of heated air supplied by the air heater device can be delimited. The sealing plugs can be arranged such that the internal heating chamber comprises the joining region and a certain boundary region of the first and/or second blade section neighboring the joining region.

The sealing plugs may be made from polymer foams and/or (balsa) wood for example. In general, thermally insulating materials are beneficial for the sealing plugs as heat loss thereby can be reduced to a minimum. Sealing against the inner walls of the respective blade section may be in particular done with an inflatable seal that is provided on an outer surface of the sealing plug facing the inner wall.

In general, the use of sealing plugs has the advantage that the spatial extension of the internal heating chamber can be limited to the joining region, optionally including boundary regions of the first and/or second blade sections neighboring the joining region.

According to another embodiment the air heater device may comprise at least one central unit comprising at least one heat source and at least one flow generation means. The central unit may comprise at least one heated outlet that is fluidically connected to the joining region by at least one air duct. In particular the central unit may be arranged externally of the first and/or second blade sections, in particular at a root section of the first and/or second blade section.

The heat source of the air heater device may be electrically powered or alternatively powered by other primary energy sources such as gaseous or liquid fuels, e.g. gas or oil operated. The flow generation means can be adapted to draw air from an environment and process it through the heat source and further to the heated outlet.

Alternatively to an arrangement of the central unit externally of the first and/or second blade section the central unit may be arranged inside the first or second blade section. In particular, the central unit may be arranged inside the inboard blade section. As typical blades, at least close to the root, provide a diameter of several meters, there is enough installation space available to place the central unit inside. This has the advantage that the required lengths of the air ducts are minimized and that valuable surface area in a production facility is saved.

In embodiments the flow generation means may be adapted to generate an airflow rate between 3000 m³/h and 15.000 m³/h, in particular between 5.000 m³/h and 12.000 m³/h.

In embodiments the heat source may be adapted to provide a heating power between 50 kW and 400 kW, in particular between 100 kW and 300 kW.

Additionally or alternatively the air heater device may be adapted to generate a temperature level at the heated outlet between 70 °C and 130 °C, in particular between 75 °C and 120 °C, in particular at above defined flow rates.

In embodiments the at least one air duct may be provided with a diameter between 200 mm and 600 mm, in particular between 300 mm and 500 mm. The air duct may be in particular provided as a flexible duct and/or an air hose. The air duct may in particular be thermally insulated to minimize heat loss.

According to yet another embodiment the method may comprise step ff1) recirculating an air stream from the inner hollow spaces of the first and/or second blade sections in the joining region back to the air heater device as a recirculated air stream, re-heating the recirculated air stream and re-supplying it as a re-heated air stream to the inner hollow spaces of the first and/or second blade sections in the joining region.

In particular the central unit of the air heater device may comprise a recirculated inlet that is fluidically connected to the inner hollow space of the joining region and adapted to receive the recirculated air stream.

In particular step ff1) may be performed continuously during step ff).

In embodiments the central unit of the air heater device may be equipped with at least one temperature probe that can be arranged at the at least one heated outlet. The temperature probe can be in particular connected to a control device of the central unit to control the heating power of the at least one heat source so that the temperature of the stream of heated air provided through the heated outlet is kept in a desired temperature range of preferably 90 °C (+/- 5 °C). Alternatively or additionally a temperature probe may be arranged at the recirculated inlet.

According to another embodiment, the stream of heated air supplied by the air heater device in step ff) at least partially comprises a stream of heated ambient air. In particular the stream of heated air supplied by the air heater device in step ff) additionally comprises the re-heated air stream, wherein in particular a ratio between the stream of heated ambient air and the re-heated air stream is adjustable.

At least partially using re-heated recirculated air for generating the stream of heated air has significant energetic advantages as the amount of primary energy needed to power the at least one heat source of the air heater device can be minimized.

According to a further embodiment the air heater device may comprise at least one recirculation valve that is adapted for an adjustment, in particular a continuous adjustment, of the ratio between the stream of heated ambient air and the re-heated air stream. The method may then comprise an additional step of: Controlling a ration between the stream of heated ambient air and the re-heated air stream with the recirculation valve.

In embodiments the recirculation valve can be manually operated or coupled to an actuator, in particular an electro-mechanical actuator. The electro-mechanical actuator can be in particular functionally coupled to the control device of the central unit of the air heater device to control the recirculation ratio based on a predetermined set value.

According to a further embodiment, the method may comprise step g) after the curable resin has cured to a desired level, performing a cooling cycle, wherein performing the cooling cycle comprises: With the air heater device supplying a stream of non-heated air into the inner hollow spaces of the first and/or second blade sections in the joining region, wherein the stream of non-heated air is in particular an airstream drawn directly from the environment.

The stream of non-heated air can be provided at a temperature of the environment, i.e. at ambient temperature or optionally be additionally cooled down by a cooling device incorporated in the air heater device. The technical benefit of performing the cooling step is that the joint blade reaches ambient temperature quicker so that waiting time is reduced and the joint blade is ready for further processing earlier so that the overall cycle time for the joining process is reduced.

In the cooling cycle the external heater may be completely switched off.

According to another embodiment, the first and second blade sections may be longitudinally split sections, wherein the first blade section is an inboard blade section and the second blade section is an outboard blade section, wherein in particular in step f1) an inboard sealing plug is placed in a region of the inboard blade section that is neighboring the joining region on a longitudinally inner side and an outboard sealing plug is placed in a region of the outboard blade section that is neighboring the joining region at a longitudinally outer side.

In a yet further embodiment, the outboard and/or inboard sealing plugs may comprise two separate sub-sealing plugs that mate with an inner cross section of the inner chambers of the blade sections defined by the inner separation wall. Additionally or alternatively the inboard sealing plug may be provided in a region close to a root section of the inboard blade section as an integral inboard sealing plug.

In embodiments the "plugged" individual volumes in the two separate chambers may be around 130-180 m³ for a trailing edge chamber and around 70-110 m³ for a leading edge chamber. Based on this significant volume of air inside the chambers and considering the thermal masses adjoining the chambers, the major heating power required for the air heater device is well understandable.

According to a further embodiment, the method may comprise step b2) placing at least one joint mandrel inside of the first and second blade sections at least in the joining region, wherein the joint mandrel comprises at least one aperture that provides a flow-throughlet for the stream of heated air, wherein in particular the joint mandrel comprises at least one further aperture that provides a flow-throughlet for the recirculated air stream.

In embodiments the joint mandrel may be retracted/lifted before the heating step is executed. This has the advantage that an air gap can be created between an outer surface of the joint mandrel and inner surfaces of the blade sections. This allows for a better heat transfer from the stream of heated air both to the joining region and the shell/core structure of the blade sections to be joined.

In another embodiment the heating step in step f) comprises heating boundary regions of the first and/or second blade sections directly adjoining the joining region, in particular in steps ff) and fff).

By not strictly limiting the influence of the heating step to the joining region the thermal masses of the first and/or second blade section neighboring the joining region can be beneficially tempered so that conductive heat losses driven by a temperature difference between the joining region and the adjoining boundary regions of the first and/or second blade sections can be minimized. This further assists the curing of the curable resin and in particular ensures full and rapid curing in low epoxy volume areas.

According to yet another embodiment, the external heater may comprise at least one contact heater. Alternatively or additionally the individually controllable or controlled heating zones may be distributed around the joining region in a circumferential and/or longitudinal direction.

In embodiments the contact heater may be provided as a heating blanket or heating mat. Additionally or alternatively the external heater may comprise an electric heater, in particular a resistance heater and/or a PTC-heater. The resistance heater may be in particular provided as a graphite based heater. A contact heater embodied as a heating blanket or heating mat may be in particular provided as a silicone rubber heating mat. Alternatively, the external heater may comprise a heat exchanger that is flown through by a heated heat transfer medium, e.g. water.

For example the external heater comprises at least 6, in particular at least 8, individually controlled heating zones.

In embodiments the external heater comprises individually controllable heating zones that are arranged at the following positions of the split blade:
- upper section of an inboard blade section neighboring the joining region;
- lower section of an inboard blade section neighboring the joining region;
- upper section of an outboard blade section neighboring the joining region;
- lower section of an outboard blade section neighboring the joining region;
- upper section of the joining region;
- lower section of the joining region.

Additionally, gaps between above heating zones, especially between the upper/lower sections of the joining region and the inboard/outboard blade sections can be provided with separate gap heating zones.

Typical heating powers in above heating zones may be as follows:
- upper section of the inboard blade section neighboring the joining region: 10.000 W - 15.000 W;
- lower section of the inboard blade section neighboring the joining region: 10.000 W - 15.000 W;
- upper section of the outboard blade section neighboring the joining region: 10.000 W - 15.000 W;
- lower section of the outboard blade section neighboring the joining region: 10.000 W - 15.000 W;
- upper section of the joining region: 8.000 W - 12.000 W;
- lower section of the joining region: 8.000 W - 12.000 W;
- gap heating zones between above heating zones: 1.500 W - 3.000 W.

In embodiments the heating power per unit area in the heating zones can range from 400 W/m² and 750 W/m².

In embodiments one or more of above heating zones can be subdivided to sub-heating zones in a circumferential and/or longitudinally distributed manner that, wherein a heating power in the sub-heating zones may be individually controlled as well.

The external heater may comprise a central unit that provides individually controlled heating power outputs for each heating zone. Additionally, the external heater may comprise at least one temperature probe per heating zone, arranged in the respective heating zone. In embodiments each heating zone may be provided with more than one temperature probe, for example with 5 or 6 temperature probes. This has the specific advantage that a redundancy can be provided and an average temperature value per heating zone can be calculated so that local temperature deviations can be compensated. The temperature probes may be particularly provided as PT-100 resistance thermometers, as a thermocouples or any other temperature probe that the person skilled in the art considers applicable.

Further, the central unit may be equipped with a control device that is functionally coupled with the temperature probes to control the temperature in the heating zones under by adaptation of the heating power based on a predetermined temperature set value. The set value in particular can be in the range of 20 °C - 120 °C. The control device may be in particular adapted to provide a heat-up cycle in that the temperature set value is reached with a predefined ramp up (°C/time unit).

The method according to the invention may be at least partly implemented in hardware and/or in software. If said method is implemented in hardware, it may be embodied as a device, e.g. as a computer or as a processor or as a part of a system, e.g. a computer system. If said method is implemented in software it may be embodied as a computer program product, as a function, as a routine, as a program code or as an executable object.

According to another aspect of the invention, a use of an air heater device in a method for joining at least two sections of a wind turbine blade according to the invention is proposed.

According to yet another aspect of the invention, a use of an external heater in a method for joining at least two sections of a wind turbine blade according to the invention is proposed. The external heater comprises a multitude of heating zones, wherein the heating power in the heating zones is individually controllable.

The embodiments and features described with reference to the method of the present invention apply mutatis mutandis to the apparatuses of the present invention and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 - Fig. 9 show flow charts of different embodiments of the method according to the invention;
Fig. 9 shows a schematic section of a split blade with an air heater device used in the method according to the invention;
Fig. 10 shows another schematic section of a split blade with an air heater device used in the method according to the invention;
Fig. 11 shows an isometric view of a split blade with an external heater;
Fig. 12 shows the external heater in detail;
Fig. 13 - Fig. 18 shows various contact heaters of the external heater.

In the Figures, like reference numerals designate like or functionally equivalent elements, unless otherwise indicated.

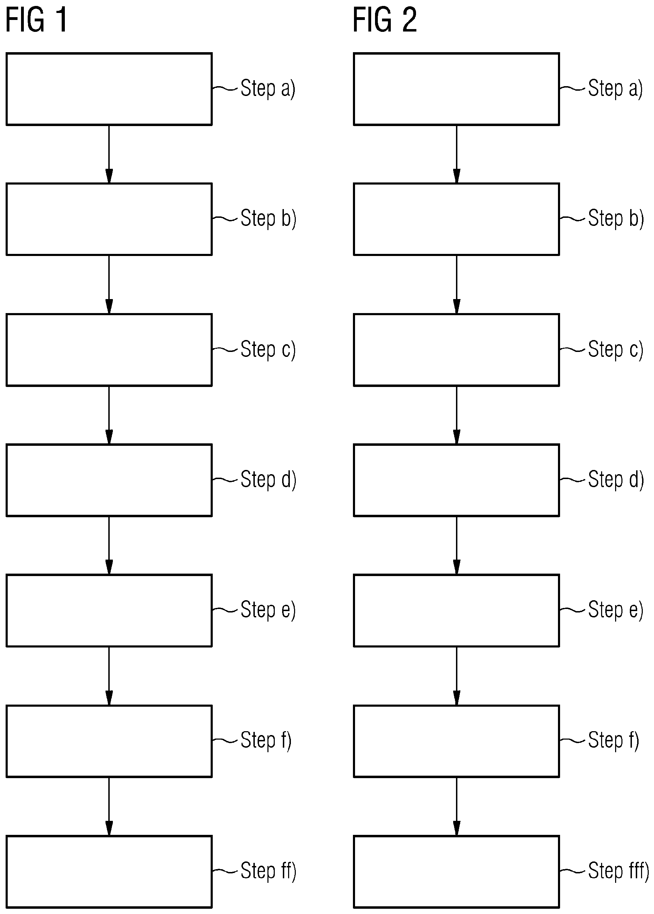

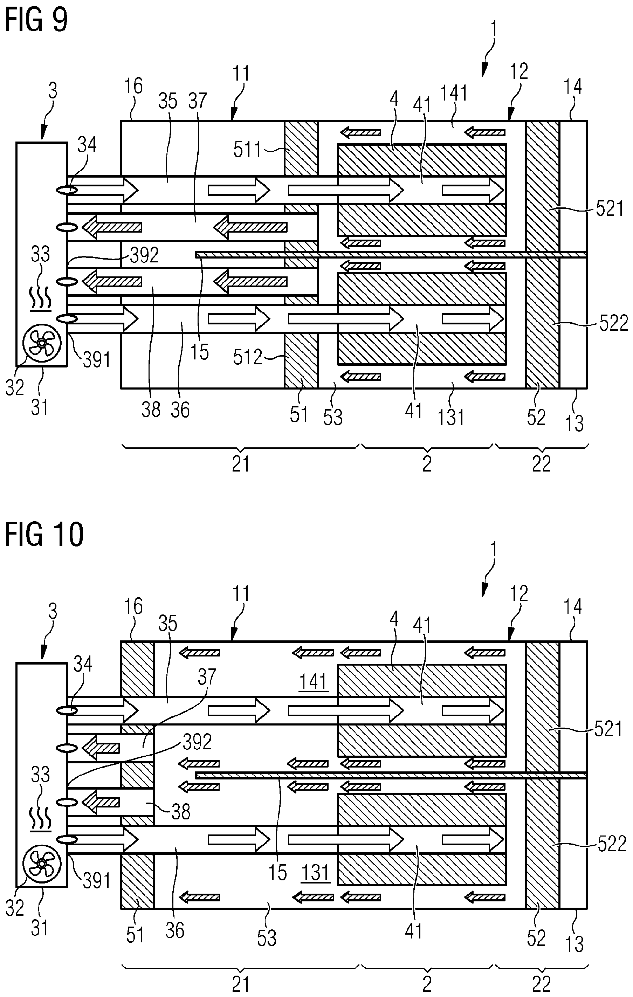

The reference numerals referred to in the description of the method steps shown in Figs. 1-8 are depicted in at least one of Figs. 9-18.

Fig. 1 shows a flow chart of a first embodiment of the method for joining at least two sections of a wind turbine blade according to the invention.

The method comprises the following steps:
a) providing a first blade section 11 and a second blade section 12, each comprising an inner hollow space;
b) arranging the first 11 and the second blade section 12 so that they adjoin each other in a joining region 2;
c) sealing the joining region 2 against neighboring regions 21,22 of the first 11 and second blade sections 12 to create a sealed joining region 2,
d) evacuating the sealed joining region 2;
e) injecting a curable resin into the sealed joining region 2;
f) curing the curable resin by performing at least one heating step comprising applying heat at least to the joining region 2, wherein the heating step comprises:
   ff) providing an air heater device 3 and with the air heater device 3 supplying a stream of heated air into the inner hollow spaces of the first 11 and/or second blade sections 12 at least in the joining region 2.

Fig. 2 shows a flow chart of a second embodiment of the method for joining at least two sections of a wind turbine blade not according to the invention.

Therein, instead of step ff) a step fff) Placing an external heater 6 on an outer surface of the first 11 and/or second blade sections 12 at least in the joining region 2, wherein the external heater 6 comprises a multitude of heating zones 62-69, wherein a heating power in the heating zones 62-69 is individually controlled, is executed.

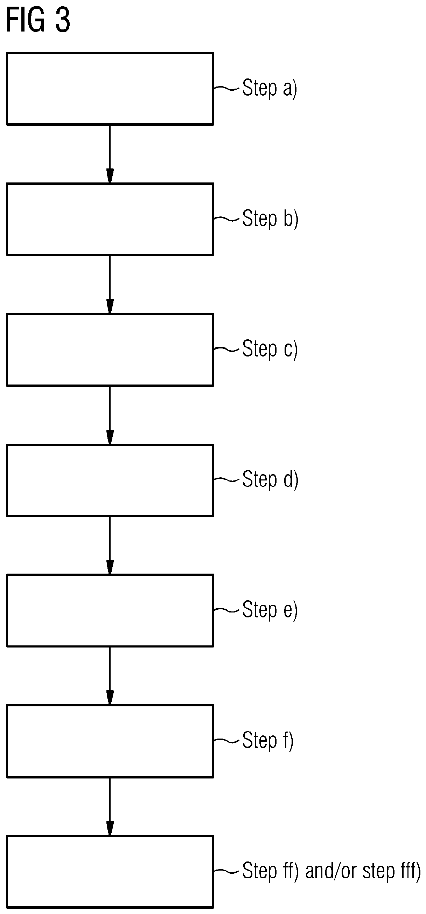

Fig. 3 shows a flow chart of a third embodiment of the method for joining at least two sections of a wind turbine blade according to the invention.

Therein, both steps ff) and fff) described above may be executed, wherein the execution can be performed simultaneously or serially.

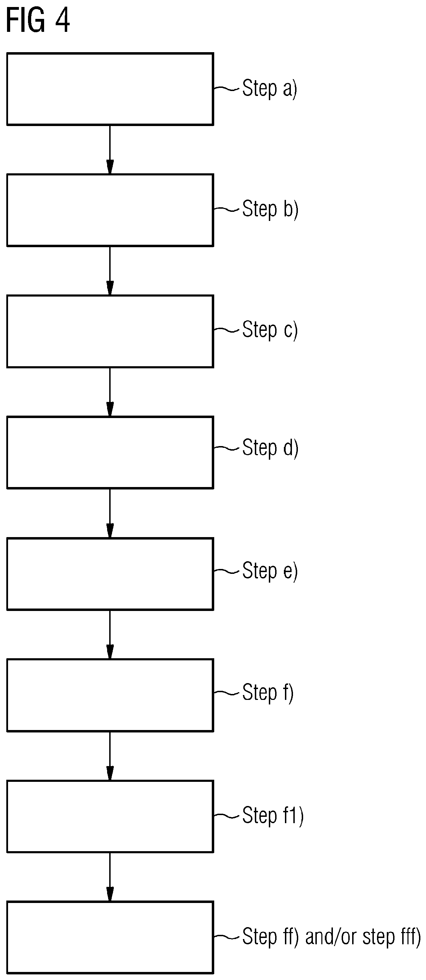

Fig. 4 shows a flow chart of a fourth embodiment of the method for joining at least two sections of a wind turbine blade according to the invention.

Therein, step f1) Providing at least two sealing plugs 51,52 and positioning the at least two sealing plugs inside of the first 11 and second blade section 12 at a position neighboring the joining region 2 so that a fluidically closed internal heating chamber 53 is formed around the joining region 2, is executed additionally before step f).

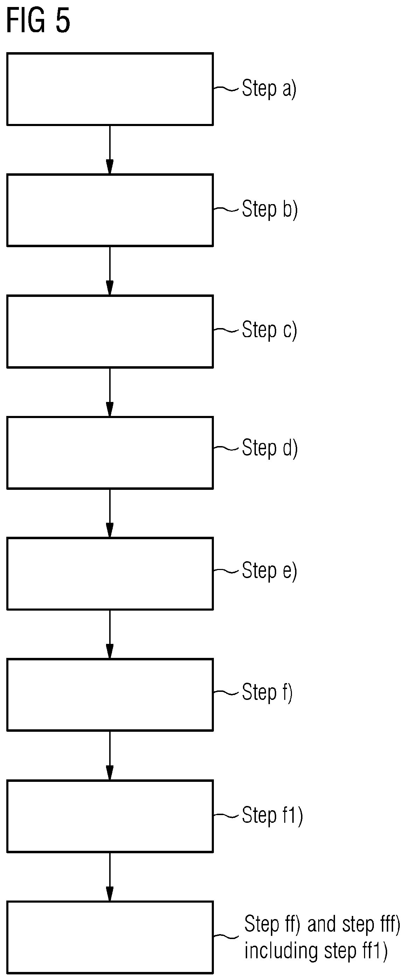

Fig. 5 shows a flow chart of a fifth embodiment of the method for joining at least two sections of a wind turbine blade according to the invention.

Therein, during the execution of step ff) step ff1) recirculating an air stream from the inner hollow spaces of the first 11 and/or second blade sections 12 in the joining region 2 back to the air heater device 3 as a recirculated air stream, re-heating the recirculated air stream and re-supplying it as a re-heated air stream to the inner hollow spaces of the first 11 and/or second blade sections 12 in the joining region 2, wherein in particular the central unit 31 of the air heater device 3 comprises a recirculated inlet 392 that is fluidically connected to the inner hollow space of the joining region 2 and adapted to receive the recirculated air stream, is performed continuously.

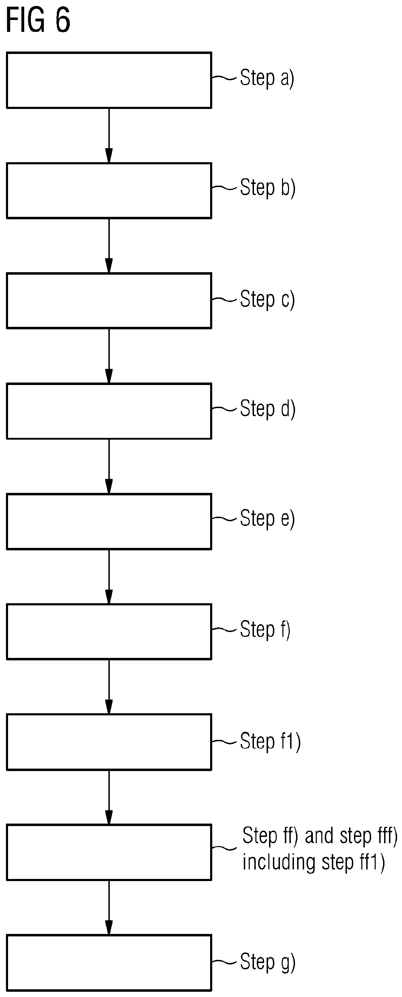

Fig. 6 shows a flow chart of a sixth embodiment of the method for joining at least two sections of a wind turbine blade according to the invention.

Therein, step g) after the curable resin has cured to a desired level, performing a cooling cycle, wherein performing the cooling cycle comprises: With the air heater device 3 supplying a stream of non-heated air into the inner hollow spaces of the first 11 and/or second blade sections 12 in the joining region 2, wherein the stream of non-heated air is in particular an airstream drawn directly from the environment, is executed after step ff).

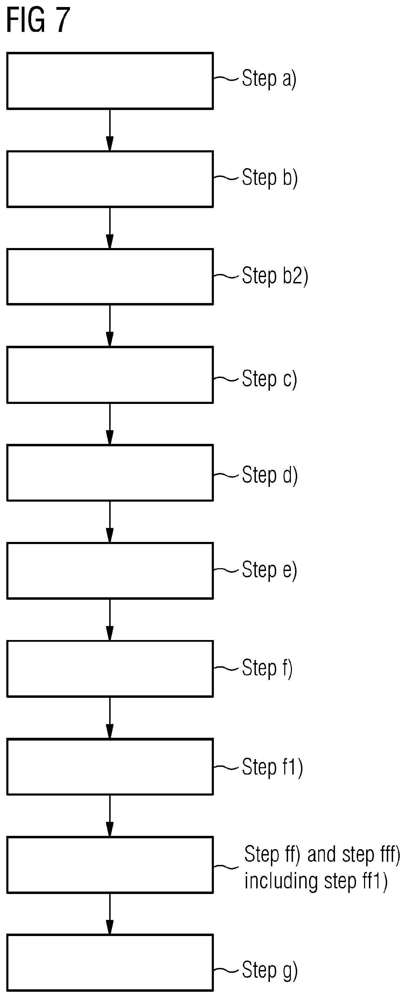

Fig. 7 shows a flow chart of a seventh embodiment of the method for joining at least two sections of a wind turbine blade according to the invention.

Therein, step b2) is executed after step b). Step b2) comprises placing at least one joint mandrel 4 inside of the first 11 and second blade sections 12 at least in the joining region 2, wherein the joint mandrel 4 comprises at least one aperture 41 that provides a flow-throughlet for the stream of heated air, wherein in particular the joint mandrel 4 comprises at least one further aperture that provides a flow-throughlet for the recirculated air stream.

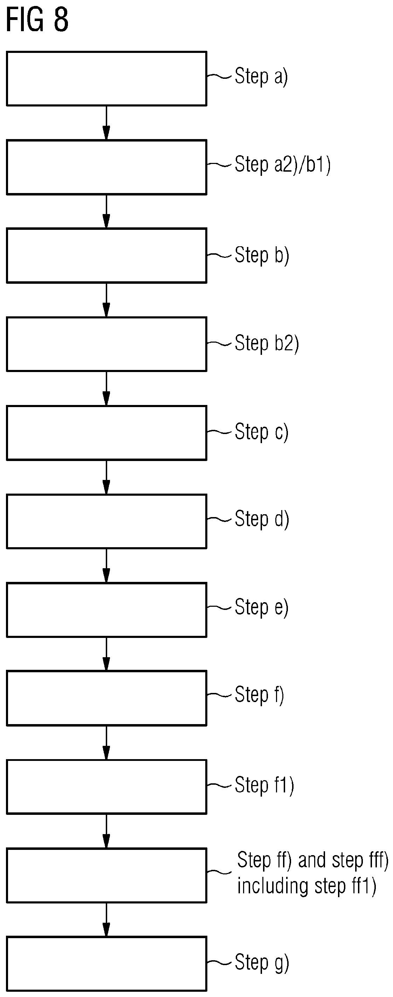

Fig. 8 shows a flow chart of an eighth embodiment of the method for joining at least two sections of a wind turbine blade according to the invention.

Therein at least a step a2) is executed after step a). Step a2) includes providing a joining adapter that comprises a first mating zone corresponding to an interface of the first blade section 11 with the joining region 2 and a second mating zone corresponding to an interface of the second blade section 12 with the joining region 2.

Additionally the method may comprise step b1) Placing the joining adapter in the joining region 2 between the interfaces of the first 11 and second blade sections 12.

Alternatively, step a2) can be performed during step a), however before step b). Step b1) can be performed before step b).

Figs. 9 and 10 show a section of a split wind turbine blade 1 comprising an inboard blade section 11 and an outboard blade section 12 joined together in a joining region 2. Additionally, an air heater device 3 is shown that is used to execute method step ff) of the method according to the invention.

Both the air heater device 3 and specifics of the execution of step ff) are described in the following.

The air heater device 3 comprises a central unit 31 having a heat source 33 and a flow generation means 32. The central unit 31 is arranged externally of the inboard 11 and outboard blade section 12 at a root portion 16 of the split blade 1. The central unit comprises heated outlets 391 that feed a stream of heated air (white arrows) into air ducts 35,36 for the stream of heated air. The stream of heated air may be at least partially comprised of heated ambient air that the air heater device 3 draws from the environment.

The joining region 2 is sealed by two sealing plugs 51,52 that are positioned inside of the first 11 and second blade section 12 at a position neighboring the joining region 2 so that a fluidically closed internal heating chamber 53 is formed around the joining region 2. Specifically, an inboard sealing plug 51 is placed in a region of the inboard blade section 11 that is neighboring the joining region 2 on a longitudinally L inner side (close to the root section 16) and an outboard sealing plug 52 is placed in a region of the outboard blade section 12 that is neighboring the joining region 2 at a longitudinally outer side. The sealing plugs 51,52 seal the joining region 2 by a suitable seal that is provided on an outer surface of the respective sealing plug 51,52 that abuts against an inner surface of the inboard 11 and/or outboard blade section 12. The spatial extension of the internal heating chamber 53 in the longitudinal direction L includes the joining region 2 but further extends into respective inboard and outboard boundary regions 21,22 of the blade sections 11,12; for example the longitudinal extension of the internal heating chamber 53 can be around 10 m.

The blade sections 11,12 comprise a shear web 15 extending in the longitudinal direction L, wherein the shear web 15 defines at least two inner chambers 131,141 in the inner hollow space of the first 11 and second blade sections 12. There are two separate air ducts 35,36 for the stream of heated air, one connected to the inner chamber 131 and the other one to the inner chamber 141. The inner chamber 131 is a leading edge 13 chamber while the inner chamber 141 is a trailing edge 14 chamber.

As the blade sections 11,12 are internally "divided" by the shear web 15 in the longitudinal direction L, the inboard/outboard sealing plugs 51,52 comprise two separate sub-sealing plugs 511,512,521,522 that mate with an inner cross section of the inner chambers 131,141 of the blade sections 11,12 defined by the shear web 15. Accordingly, the sub-sealing plugs each seal the joining region 2 by a suitable seal that is provided on an outer surface of the respective sub-sealing plug 511,512,521,522 that in sections thereof seals against an inner surface of the inboard 11 and/or outboard blade section 12 and in other sections thereof against the shear web 15.

The inboard sealing plug 51, more specifically the inboard sub-sealing plugs 511,512, each comprise an opening that allows the stream of heated air to pass the respective sub-sealing plug 511,512 into the inner chambers 131,141.

Inside of the first 11 and second blade sections 12 a joint mandrel 4 is arranged in the joining region 2. The joint mandrel 4 has an aperture 41 that provides a flow-throughlet for the stream of heated air. The air ducts 35,36 for the stream of heated air are connected to the apertures 41 of the joint mandrel 4 so that the stream of heated air passes through the joint mandrel 4 in the longitudinal direction and exits the joint mandrel 4 at a longitudinally opposing end. The stream of heated air from there on distributes in the respective inner chambers 131,141 at the leading 13 and trailing edge 14 and heats up the joining region 2 from the inner side. In particular the stream of heated air heats up the shear web 15, the spar cap/beam, the joint mandrel 4 itself and other components of the blade structure such as the shell and core. The joint mandrel 4 in the longitudinal direction L extends in the joining region 2 and further into respective inboard and outboard boundary regions 21,22 of the blade sections 11,12.

Further, an air stream from the inner chambers 131,141 is recirculated back to the air heater device 3 as a recirculated air stream. The recirculated air stream is depicted with black arrows. To allow for this, the inboard sealing plug 51, more specifically the inboard sub-sealing plugs 511,512, each comprise an opening that allows the recirculated air stream to pass the respective sub-sealing plug 511,512 back to the air heater device 3. The respective opening of the sub-sealing plugs 511,512 is connected to an air duct for recirculated air stream 37,38 that is fluidically connected to a recirculated inlet 392 of the air heater device 3 that receives the recirculated air stream. Within the air heater device 3 the recirculated air stream is re-heated and then re-supplied as a re-heated air stream back to the inner chambers 131,141. This is to say, the stream of heated air supplied by the air heater device 3 comprises the re-heated air stream and a portion of heated ambient air. The air heater device may in particular provide a means for adaption of a ratio between the stream of heated ambient air and the re-heated air stream.

The air heater device 3 comprises temperature probes 34 arranged at least at the heated outlets 391. Additionally the air heater device 3 can comprise further temperature probes 34 at the recirculated inlets 392.

The section of a split wind turbine blade 1 shown in Fig. 10 is very similar to Fig. 9. The difference however is that the inboard sealing plug 51 is provided at a root section 16 of the blade 1, respectively of the inboard blade section 11. As no shear web 15 is present in the root section 16, this has the advantage that the inboard sealing plug 51 can be provided as an integral part sealing against the inner wall of the inboard blade section 11. However a slightly higher energy consumption has to be accepted as further portions of the inboard blade section 11 are heated that are located more remote from the actual joining region 2.

A joining adapter used to join the inboard 11 and outboard blade section 12 is not specifically shown in the drawings but can be arranged in the joining region, especially on an inside thereof, when executing the method according to the invention.

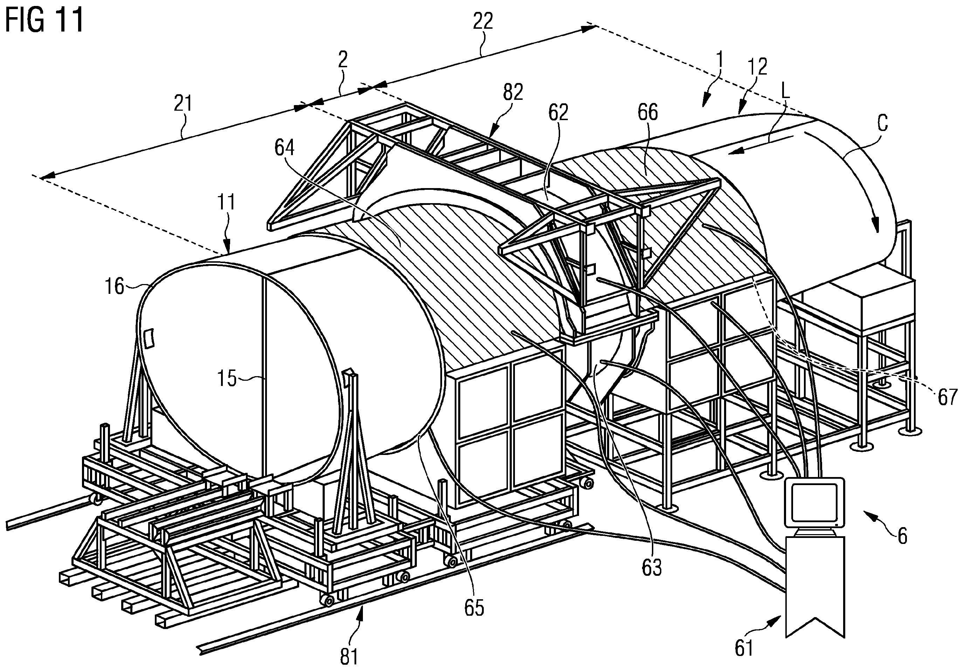

Fig. 11 shows the external heater 6 that is used in the method according to the invention. The split blade 1 is received in a lower mold 81 that holds the inboard 11 and outboard blade section 12 adjoining each other in the joining region 2, so that the blade sections 11,12 are correctly positioned for the joining process. On an upper side, the joining region 2 is spanned by an upper bar 82 that provides further support the joining region 2.

The external heater 6 comprises at least six heating zones 62-67 arranged as follows:
- upper section of an inboard blade section neighboring the joining region (64);
- lower section of an inboard blade section neighboring the joining region (65);
- upper section of an outboard blade section neighboring the joining region (66);
- lower section of an outboard blade section neighboring the joining region (67);
- upper section of the joining region (62);
- lower section of the joining region (63).

The heating zones 64,65,66,67 in the sections of the inboard/outboard blade sections 11,12 neighboring the joining region 2 may cover at least 2 m, in particular at least 5 m, of length away from the joining region 2.

Additional heating zones are arranged at gaps between above heating zones, namely between the upper/lower sections of the joining region and the inboard/outboard blade sections 11,12. These gap heating zones are not shown in this drawing.

The heating power in the heating zones 62-67 is individually controlled. For this purpose, the external heater 6 comprises a central unit 61 that provides individually controlled heating power outputs for each heating zone 62-67. The external heater 6 further comprises at least one temperature probe per heating zone 62-67 that allows the central unit 61 to control the heating power in the heating zones 62-67 to reach a predetermined temperature level.

The heating zones
- lower section of an inboard blade section neighboring the joining region (65) and/or
- lower section of an outboard blade section neighboring the joining region (67) an/or
- upper section of the joining region (62) and/or
- lower section of the joining region (63)
each comprise a contact heater embodied as a silicone rubber heating mat. The contact heaters of above heating zones are in particular arranged, preferable fixedly attached, to the lower mold 81 and/or to the upper bar 82 respectively.

The heating zones
- upper section of an inboard blade section neighboring the joining region (64) and/or
- upper section of an outboard blade section neighboring the joining region (66)
each comprise a contact heater embodied as a heating blanket with reinforced straps and loops which allow the heating blankets to be pulled over the blade sections 11,12. The contact heaters of above heating zones are in particular loosely arranged on the upper side of the blade sections 11,12 and temporarily fixed by the straps and loops. Additionally, the contact heaters of above heating zones may be fixed with an adhesive tape on the upper side of the blade sections 11,12.

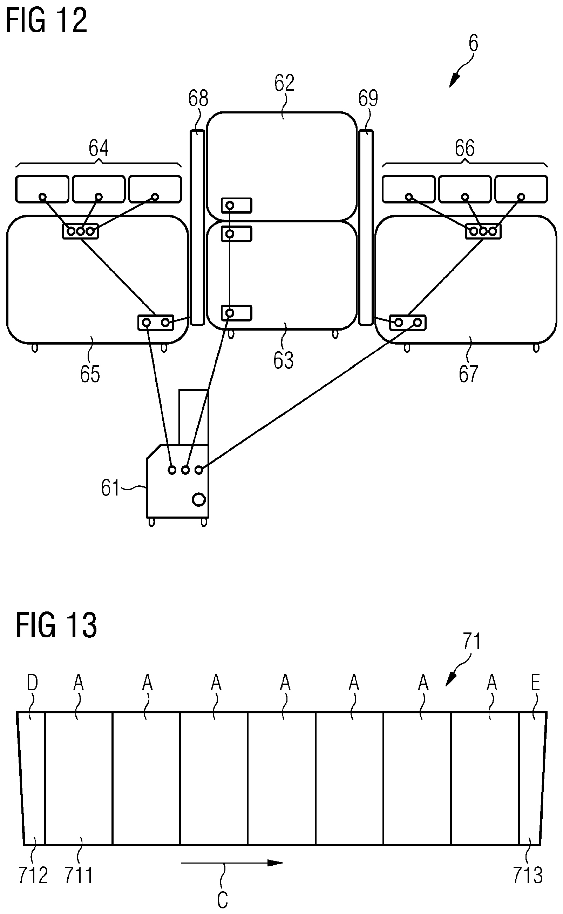

Fig. 12 shows a schematic view of the external heater 6. In this embodiment the central unit 61 has three main heating power outputs.

A first heating power output is connected to the heating zone 65 of the lower section of the inboard blade section neighboring the joining region. From this heating zone, the heating power is further distributed to the heating zone 64 of the upper section of the inboard blade section neighboring the joining region, wherein the heating zone 64 is divided to three individual sub-heating zones. Further, the heating power is distributed to the heating zone 68 of a gap heater that covers a gap between the joining region heaters and the inboard heaters.

A second heating power output is connected to the heating zone 63 of the lower section of the joining region. From this heating zone, the heating power is further distributed to the heating zone 62 of the upper section of the joining region.

A third heating power output is connected to the heating zone 67 of the lower section of the outboard blade section neighboring the joining region. From this heating zone, the heating power is further distributed to the heating zone 66 of the upper section of the outboard blade section neighboring the joining region, wherein the heating zone 66 is divided to three individual sub-heating zones. Further, the heating power is distributed to the heating zone 69 of a gap heater that covers a gap between the joining region heaters and the outboard heaters.

The heating power in the heating zones 62-69 and the respective sub-heating zones can be individually controlled by the central unit 61.

To allow for an effective temperature control and a monitoring of the heating step, the external heater 6 comprises at least one temperature probe per heating zone 62-69. The central unit 61 further comprises a controller that is coupled to the temperature probes to control the temperature in the heating zones 62-69 by adaptation of the heating power based on a predetermined temperature set value. The temperature set value can be in the range of 20 °C - 120 °C.

Fig. 13 shows a contact heater 71 for the heating zone 62 at the upper section of the joining region 2. The contact heater 71 comprises sub-heating zones 711,712,713 of heater types A, D and E arranged neighboring each other in a circumferential direction C of the blade.

The specifications in an example of the invention may be in particular as follows:

### Heater type A:

Silicone heater with adhesive on top
1000 mm x 2000 mm
1200 W / 230 V

### Heater type D:

Silicone heater with adhesive on top
800 / 780 mm x 2000 mm
1050 W / 230 V

### Heater type E (Flipped version of D):

Silicone heater with adhesive on top
800 / 780 mm x 2000 mm
1050 W / 230 V
Total dimensions:

| | |
|---|---|
| Length 1: | 2 x 800 + 7 x 1000 = 8600 mm |
| Length 2: | 2 x 780 + 7 x 1000 = 8560 mm |
| Width: | 2000 mm |
| Total Power: | 10.500 W / 652 W/m² |

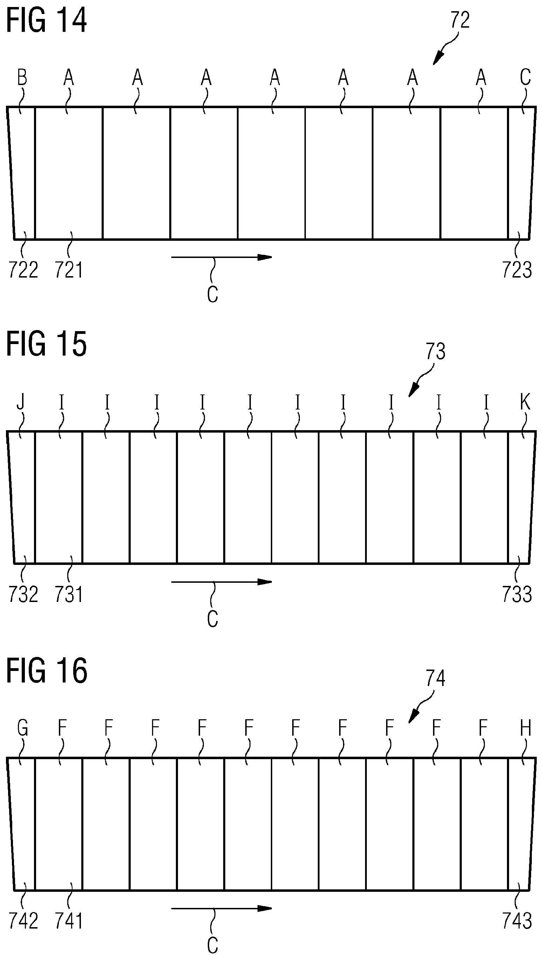

Fig. 14 shows a contact heater 72 for the heating zone 63 at the lower section of the joining region 2. The contact heater 71 comprises sub-heating zones 721,722,723 of heater types A, B and C arranged neighboring each other in a circumferential direction C of the blade.

The specifications may be in particular as follows:

### Heater type A:

Silicone heater with adhesive on top
900 mm x 2000 mm
1200 W / 230 V

### Heater type B:

Silicone heater with adhesive on top
900 / 800 mm x 2000 mm
1110 W / 230 V

### Heater type C (Flipped version of B):

Silicone heater with adhesive on top
900 / 800 mm x 2000 mm
1110 W / 230 V

### Total dimensions:

| | |
|---|---|
| Length 1: | 9 x 900 = 8100 mm |
| Length 2: | 2 x 800 + 7 x 900 = 7900 mm |
| Width: | 2000 mm |
| Total Power: | 10.620 W / 652 W/m² |

Fig. 15 shows a contact heater 73 for the heating zone 67 at the lower section of the outboard blade section 12 neighboring the joining region 2. The contact heater 73 comprises sub-heating zones 731,732,733 of heater types I, J and K arranged neighboring each other in a circumferential direction C of the blade.

The specifications may be in particular as follows:

### Heater type I:

Silicone heater with foam and adhesive on foam
700 mm x 2800 mm
1120 W / 230 V

### Heater type J:

Silicone heater with foam and adhesive on foam
500 / 690 mm x 2800 mm
1025 W / 230 V

### Heater type K (Flipped version of J):

Silicone heater with foam and adhesive on foam
500 / 690 mm x 2800 mm
1025 W / 230 V

### Total dimensions:

| | |
|---|---|
| Length 1: | 2 x 690 + 10 x 700 = 8380 mm |
| Length 2: | 2 x 500 + 10 x 700 = 8000 mm |
| Width: | 2800 mm |
| Total Power: | 13.250 W / 600 W/m2 |

Fig. 16 shows a contact heater 74 for the heating zone 65 at the lower section of the inboard blade section 11 neighboring the joining region 2. The contact heater 74 comprises sub-heating zones 741,742,743 of heater types F, G and H arranged neighboring each other in a circumferential direction C of the blade.

The specifications may be in particular as follows:

### Heater type F:

Silicone heater with foam and adhesive on foam
690 mm x 2800 mm
1160 W / 230 V

### Heater type G:

Silicone heater with foam and adhesive on foam
650 / 700 mm x 2800 mm
1125 W / 230 V

### Heater type H (Flipped version of G):

Silicone heater with foam and adhesive on foam
650 / 700 mm x 2760 mm
1125 W / 230 V

### Total dimensions:

| | |
|---|---|
| Length 1: | 2 x 700 + 10 x 690 = 8300 mm |
| Length 2: | 2 x 650 + 10 x 690 = 8200 mm |
| Width: | 2800 mm |
| Total Power: | 13.850 W / 604 W/m² |

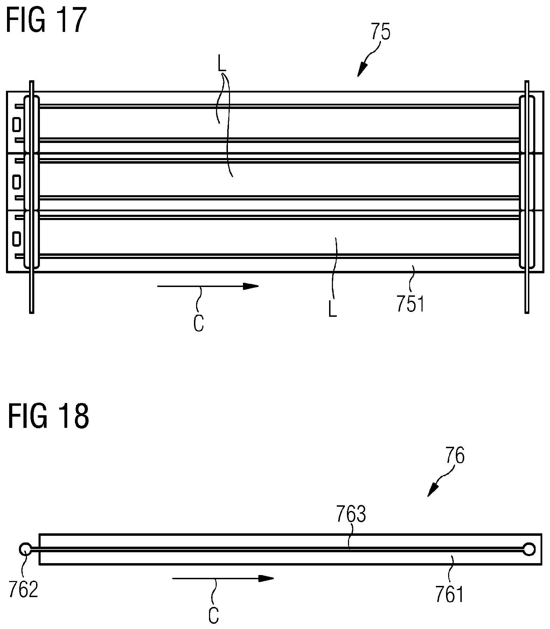

Fig. 17 shows a contact heater 75 for the heating zones 64,66 at the upper sections of both the inboard and outboard blade section 11,12 neighboring the joining region 2. The contact heater 75 comprises sub-heating zones 751 of heater type L arranged neighboring each other in a longitudinal direction that is a direction perpendicular the circumferential direction C of the blade.

The specifications may be in particular as follows:

### Heater L:

Heating blanket with reinforced straps and loops for pulling over the blade

| | |
|---|---|
| Dimensions: | 8000 x 900 mm |
| Power: | 4600 W /3 X 400V |
| Total Power: | 13.800 W |

Fig. 18 shows a contact heater 76 for the heating zones 69,69 at the gap between the joining region heaters and the inboard/outboard heaters. The contact heater 76 comprises a sub-heating zone 761 of heater type N and comprises a strap 763 for pulling the heater over the blade and a buckle 762 for closing it around the circumference of the blade.

The specifications may be in particular as follows:

### Heater N:

| Heating blanket with straps and buckles | |
|---|---|
| Dimensions: | 250 x 16.000 mm |
| Power: | 2300 W / 230 V |

Although the present invention has been described in accordance with preferred embodiments, it is obvious for the person skilled in the art that modifications are possible in all embodiments.

## Claims

1. A method for joining at least two sections (11,12) of a wind turbine blade (1), comprising the steps:
a) providing a first blade section (11) and a second blade section (12), each comprising an inner hollow space;
b) arranging the first (11) and the second blade section (12) so that they adjoin each other in a joining region (2);
c) sealing the joining region (2) against neighboring regions (21,22) of the first (11) and second blade sections (12) to create a sealed joining region (2),
d) evacuating the sealed joining region (2);
e) injecting a curable resin into the sealed joining region (2);
f) curing the curable resin by performing at least one heating step comprising applying heat at least to the joining region (2), wherein the heating step comprises:
ff) providing an air heater device (3) and, with the air heater device (3), supplying a stream of heated air into the inner hollow space of the first (11) and/or second blade sections (12) at least in the joining region (2), **characterized in that**
the first (11) and second blade sections (12) comprise at least one inner separation wall (15), wherein the at least one inner separation wall (15) defines at least two inner chambers (131,141) in the inner hollow space of the first (11) and second blade sections (12), and wherein in step ff) at least two separate streams of heated air are supplied to the at least two inner chambers (131,141).

2. The method according to claim 1, wherein the method comprises step
f1) providing at least two sealing plugs (51,52) and positioning the at least two sealing plugs inside of the first (11) and second blade section (12) at a position neighboring the joining region (2) so that a fluidically closed internal heating chamber (53) is formed around the joining region (2),
wherein in particular step f1) is performed before step f).

3. The method according to claim 1 or 2,
wherein the air heater device (3) comprises at least one central unit (3) comprising at least one heat source (33) and at least one flow generation means (32), wherein the central unit (31) comprises at least one heated outlet (391) that is fluidically connected to the joining region (2) by at least one air duct (35,36), wherein in particular the central unit (31) is arranged externally of the first (11) and/or second blade sections (12), in particular at a root section (16) of the first (11) and/or second blade section (12).

4. The method according to one of claims 1 - 3, wherein the method comprises step ff1) recirculating an air stream from the inner hollow spaces of the first (11) and/or second blade sections (12) in the joining region (2) back to the air heater device (3) as a recirculated air stream, re-heating the recirculated air stream and re-supplying it as a re-heated air stream to the inner hollow spaces of the first (11) and/or second blade sections (12) in the joining region (2),
wherein in particular the central unit (31) of the air heater device (3) comprises a recirculated inlet (392) that is fluidically connected to the inner hollow space of the joining region (2) and adapted to receive the recirculated air stream,
and wherein in particular step ff1) is performed continuously during step ff).

5. The method according to one of claims 1 - 4, wherein the stream of heated air supplied by the air heater device (3) in step ff) at least partially comprises a stream of heated ambient air, and
wherein in particular the stream of heated air supplied by the air heater device (3) in step ff) additionally comprises the re-heated air stream, wherein in particular a ratio between the stream of heated ambient air and the re-heated air stream is adjustable.

6. The method according to claim 5, wherein the air heater device (3) comprises at least one recirculation valve that is adapted for an adjustment, in particular a continuous adjustment, of the ratio between the stream of heated ambient air and the re-heated air stream.

7. The method according to one of claims 1 - 6, wherein the method comprises step g) after the curable resin has cured to a desired level, performing a cooling cycle, wherein performing the cooling cycle comprises: With the air heater device (3) supplying a stream of non-heated air into the inner hollow spaces of the first (11) and/or second blade sections (12) in the joining region (2), wherein the stream of non-heated air is in particular an airstream drawn directly from the environment.

8. The method according to one of claims 1 - 7, wherein the first (11) and second blade sections (12) are longitudinally (L) split sections, wherein the first blade section (11) is an inboard blade section (11) and the second blade section (12) is an outboard blade section (12), wherein in particular in step f1) an inboard sealing plug (51) is placed in a region of the inboard blade section (11) that is neighboring the joining region (2) on a longitudinally (L) inner side and an outboard sealing plug (52) is placed in a region of the outboard blade section (12) that is neighboring the joining region (2) at a longitudinally outer side.

9. The method according to claim 8, wherein the outboard (52) and/or inboard sealing plug (51) comprises two separate sub-sealing plugs (511,512,521,522) that mate with an inner cross section of the inner chambers (131,141) of the blade sections (11,12) defined by the inner separation wall (15) and/or wherein the inboard sealing plug (51) is provided in a region close to a root section (16) of the inboard blade section (11) as an integral inboard sealing plug (51).

10. The method according to one of claims 1 - 9, wherein the method comprises step b2) placing at least one joint mandrel (4) inside of the first (11) and second blade sections (12) at least in the joining region (2), wherein the joint mandrel (4) comprises at least one aperture (41) that provides a flow-throughlet for the stream of heated air, wherein in particular the joint mandrel (4) comprises at least one further aperture that provides a flow-throughlet for the recirculated air stream.

11. The method according to one of claims 1 - 10, wherein the heating step in step f) comprises heating boundary regions (21,22) of the first (11) and/or second blade sections (12) directly adjoining the joining region (2).

12. The method according to one of claims 1 - 11, wherein the method comprises step fff) placing an external heater (6) on an outer surface of the first (11) and/or second blade sections (12) at least in the joining region (2), wherein the external heater (6) comprises a multitude of heating zones (62-69), wherein a heating power in the heating zones (62-69) is individually controlled.

13. The method according to claim 12, wherein the external heater (6) comprises at least one contact heater (71-76) and/or wherein the individually controllable heating zones (62-69) are distributed around the joining region (2) in a circumferential (C) and/or longitudinal (L) direction.

14. Use of an air heater device (3) in a method for joining at least two sections (11,12) of a wind turbine blade (1) according to any of the preceding claims.

15. Use of an external heater (6) in a method for joining at least two sections (11,12) of a wind turbine blade (1) according to claim 12 or 13, wherein the external heater (6) comprises a multitude of heating zones (62-69), wherein the heating power in the heating zones (62-69) is individually controlled.

## Patentansprüche

1. Verfahren zum Verbinden von mindestens zwei Abschnitten (11, 12) eines Windturbinenblatts (1), umfassend die folgenden Schritte:
a) Bereitstellen eines ersten Blattabschnitts (11) und eines zweiten Blattabschnitts (12), die jeweils einen inneren Hohlraum umfassen;
b) Anordnen des ersten (11) und des zweiten Blattabschnitts (12) derart, dass sie in einem Verbindungsbereich (2) aneinandergrenzen;
c) Abdichten des Verbindungsbereichs (2) gegenüber benachbarten Bereichen (21, 22) des ersten (11) und des zweiten Blattabschnitts (12), um einen abgedichteten Verbindungsbereich (2) zu erzeugen,
d) Entleeren des abgedichteten Verbindungsbereichs (2);
e) Injizieren eines härtbaren Harzes in den abgedichteten Verbindungsbereich (2);
f) Härten des härtbaren Harzes durch Durchführen mindestens eines Heizschritts, umfassend Anwenden von Wärme mindestens auf den Verbindungsbereich (2), wobei der Heizschritt Folgendes umfasst:
ff) Bereitstellen einer Luftheizvorrichtung (3) und, mit der Luftheizvorrichtung (3), Zuführen eines Stroms von erwärmter Luft in den inneren Hohlraum des ersten (11) und/oder des zweiten Blattabschnitts (12) mindestens in dem Verbindungsbereich (2),
**dadurch gekennzeichnet, dass**
der erste (11) und der zweite Blattabschnitt (12) mindestens eine innere Trennwand (15) umfassen, wobei die mindestens eine innere Trennwand (15) mindestens zwei innere Kammern (131, 141) in dem inneren Hohlraum des ersten (11) und des zweiten Blattabschnitts (12) definiert und wobei in Schritt ff) mindestens zwei getrennte Ströme erwärmter Luft den mindestens zwei inneren Kammern (131, 141) zugeführt werden.

2. Verfahren nach Anspruch 1, wobei das Verfahren folgenden Schritt umfasst
f1) Bereitstellen von mindestens zwei Dichtstopfen (51, 52) und Positionieren der mindestens zwei Dichtstopfen innerhalb des ersten (11) und des zweiten Blattabschnitts (12) an einer Position benachbart zu dem Verbindungsbereich (2), sodass eine fluidisch geschlossene interne Heizkammer (53) um den Verbindungsbereich (2) gebildet wird,
wobei insbesondere Schritt f1) vor Schritt f) durchgeführt wird.

3. Verfahren nach Anspruch 1 oder 2, wobei die Luftheizvorrichtung (3) mindestens eine zentrale Einheit (3) umfasst, die mindestens eine Wärmequelle (33) und mindestens ein Strömungserzeugungsmittel (32) umfasst, wobei die zentrale Einheit (31) mindestens einen erwärmten Auslass (391) umfasst, der durch mindestens einen Luftkanal (35, 36) fluidisch mit dem Verbindungsbereich (2) verbunden ist, wobei insbesondere die zentrale Einheit (31) außerhalb des ersten (11) und/oder des zweiten Blattabschnitts (12), insbesondere an einem Fußabschnitt (16) des ersten (11) und/oder des zweiten Blattabschnitts (12), angeordnet ist.

4. Verfahren nach einem der Ansprüche 1 - 3, wobei das Verfahren Schritt ff1) Zurückführen eines Luftstroms aus den inneren Hohlräumen des ersten (11) und/oder des zweiten Blattabschnitts (12) in dem Verbindungsbereich (2) zu der Luftheizvorrichtung (3) als einen zurückgeführten Luftstrom, Wiedererwärmen des zurückgeführten Luftstroms und erneutes Zuführen als einen wiedererwärmten Luftstrom zu den inneren Hohlräumen des ersten (11) und/oder des zweiten Blattabschnitts (12) in dem Verbindungsbereich (2) umfasst, wobei insbesondere die zentrale Einheit (31) der Luftheizvorrichtung (3) einen zurückgeführten Einlass (392) umfasst, der fluidisch mit dem inneren Hohlraum des Verbindungsbereichs (2) verbunden und dazu ausgelegt ist, den zurückgeführten Luftstrom aufzunehmen,
und wobei insbesondere Schritt ff1) während Schritt ff) kontinuierlich durchgeführt wird.

5. Verfahren nach einem der Ansprüche 1 - 4, wobei der Strom erwärmter Luft, der in Schritt ff) durch die Luftheizvorrichtung (3) zugeführt wird, mindestens teilweise einen Strom erwärmter Umgebungsluft umfasst und
wobei insbesondere der Strom erwärmter Luft, der durch die Luftheizvorrichtung (3) in Schritt ff) zugeführt wird, zusätzlich den wiedererwärmten Luftstrom umfasst, wobei insbesondere ein Verhältnis zwischen dem Strom erwärmter Umgebungsluft und dem wiedererwärmten Luftstrom einstellbar ist.

6. Verfahren nach Anspruch 5, wobei die Luftheizvorrichtung (3) mindestens ein Rückführventil umfasst, das für eine Einstellung, insbesondere eine kontinuierliche Einstellung, des Verhältnisses zwischen dem Strom erwärmter Umgebungsluft und dem wiedererwärmten Luftstrom ausgelegt ist.

7. Verfahren nach einem der Ansprüche 1 - 6, wobei das Verfahren, nachdem das härtbare Harz auf ein gewünschtes Niveau gehärtet wurde, Schritt g) Durchführen eines Kühlzyklus umfasst, wobei das Durchführen des Kühlzyklus Folgendes umfasst: Mit der Luftheizvorrichtung (3), Zuführen eines Stroms nicht erwärmter Luft in die inneren Hohlräume des ersten (11) und/oder des zweiten Blattabschnitts (12) in dem Verbindungsbereich (2), wobei der Strom nicht erwärmter Luft insbesondere ein Luftstrom ist, der direkt aus der Umwelt gezogen wird.

8. Verfahren nach einem der Ansprüche 1 - 7, wobei der erste (11) und der zweite Blattabschnitt (12) in Längsrichtung (L) geteilte Abschnitte sind, wobei der erste Blattabschnitt (11) ein innenseitiger Blattabschnitt (11) ist und der zweite Blattabschnitt (12) ein außenseitiger Blattabschnitt (12) ist, wobei insbesondere in Schritt f1) ein innenseitiger Dichtungsstopfen (51) in einem Bereich des innenseitigen Blattabschnitts (11) platziert wird, der benachbart zu dem Verbindungsbereich (2) auf einer in Längsrichtung (L) inneren Seite ist, und ein außenseitiger Dichtungsstopfen (52) in einem Bereich des außenseitigen Blattabschnitts (12) platziert wird, der benachbart zu dem Verbindungsbereich (2) auf einer in Längsrichtung äußeren Seite ist.

9. Verfahren nach Anspruch 8, wobei der außenseitige (52) und/oder der innenseitige Dichtungsstopfen (51) zwei separate Teildichtungsstopfen (511, 512, 521, 522) umfassen, die mit einem inneren Querschnitt der inneren Kammern (131, 141) der Blattabschnitte (11, 12) zusammenpassen, die durch die innere Trennwand (15) definiert werden, und/oder wobei der innenseitige Dichtungsstopfen (51) in einem Bereich nahe einem Fußabschnitt (16) des innenseitigen Blattabschnitts (11) als ein integraler innenseitiger Dichtungsstopfen (51) bereitgestellt wird.

10. Verfahren nach einem der Ansprüche 1 - 9, wobei das Verfahren Schritt b2) Platzieren mindestens eines Gelenkdorns (4) innerhalb des ersten (11) und des zweiten Blattabschnitts (12) mindestens in dem Verbindungsbereich (2) umfasst, wobei der Gelenkdorn (4) mindestens eine Öffnung (41) umfasst, die einen Durchlass für den Strom erwärmter Luft bereitstellt, wobei insbesondere der Gelenkdorn (4) mindestens eine weitere Öffnung umfasst, die einen Durchlass für den zurückgeführten Luftstrom bereitstellt.

11. Verfahren nach einem der Ansprüche 1 - 10, wobei der Heizschritt in Schritt f) Erwärmen von Grenzbereichen (21, 22) des ersten (11) und/oder des zweiten Blattabschnitts (12) umfasst, die direkt an den Verbindungsbereich (2) angrenzen.

12. Verfahren nach einem der Ansprüche 1 - 11, wobei das Verfahren Schritt fff) Platzieren eines externen Heizers (6) an einer Außenfläche des ersten (11) und/oder des zweiten Blattabschnitts (12) mindestens in dem Verbindungsbereich (2) umfasst, wobei der externe Heizer (6) eine Vielzahl von Heizzonen (62-69) umfasst, wobei eine Heizleistung in den Heizzonen (62-69) individuell gesteuert wird.

13. Verfahren nach Anspruch 12, wobei der externe Heizer (6) mindestens einen Kontaktheizer (71-76) umfasst und/oder wobei die individuell steuerbaren Heizzonen (62-69) um den Verbindungsbereich (2) herum in einer Umfangs- (C) und/oder Längsrichtung (L) verteilt sind.

14. Verwendung einer Luftheizvorrichtung (3) in einem Verfahren zum Verbinden von mindestens zwei Abschnitten (11, 12) eines Windturbinenblatts (1) nach einem der vorhergehenden Ansprüche.

15. Verwendung eines externen Heizers (6) in einem Verfahren zum Verbinden von mindestens zwei Abschnitten (11, 12) eines Windturbinenblatts (1) nach Anspruch 12 oder 13, wobei der externe Heizer (6) eine Vielzahl von Heizzonen (62-69) umfasst, wobei die Heizleistung in den Heizzonen (62-69) individuell gesteuert wird.

## Revendications

1. Procédé d'assemblage d'au moins deux sections (11,12) d'une pale d'éolienne (1), comprenant les étapes suivantes :
a) la fourniture d'une première section de pale (11) et d'une seconde section de pale (12), comprenant chacune un espace creux interne ;
b) l'agencement de la première (11) et de la seconde section de pale (12) de sorte qu'elles soient contiguës l'une à l'autre dans une région d'assemblage (2) ;
c) l'étanchéification de la région d'assemblage (2) par rapport à des régions voisines (21,22) de la première (11) et de la seconde section de pale (12) pour créer une région d'assemblage étanchéifiée (2) ;
d) la mise sous vide de la région d'assemblage étanchéifiée (2) ;
e) l'injection d'une résine durcissable dans la région d'assemblage étanchéifiée (2) ;
f) le durcissement de la résine durcissable par la réalisation d'au moins une étape de chauffage comprenant l'application de chaleur au moins à la région d'assemblage (2), dans lequel l'étape de chauffage comprend :
ff) la fourniture d'un dispositif de chauffage d'air (3) et, avec le dispositif de chauffage d'air (3), l'introduction d'un flux d'air chauffé dans l'espace creux interne de la première (11) et/ou de la seconde section de pale (12) au moins dans la région d'assemblage (2),
**caractérisé en ce que**
la première (11) et la seconde section de pale (12) comprennent au moins une paroi de séparation interne (15), danslequel ladite au moins une paroi de séparation interne (15) définit au moins deux chambres internes (131,141) dans l'espace creux interne de la première (11) et de la seconde section de pale (12), et dans lequel, à l'étape ff), au moins deux flux séparés d'air chauffé sont fournis auxdites au moins deux chambres internes (131,141).

2. Procédé selon la revendication 1, dans lequel le procédé comprend l'étape :
f1) la fourniture d'au moins deux bouchons d'étanchéité (51,52) et le positionnement desdits au moins deux bouchons d'étanchéité à l'intérieur de la première (11) et de la seconde section de pale (12) à une position voisine de la région d'assemblage (2) de sorte qu'une chambre de chauffage interne fluidiquement fermée (53) est formée autour de la région d'assemblage (2),
dans lequel, en particulier, l'étape f1) est réalisée avant l'étape f).

3. Procédé selon la revendication 1 ou 2, dans lequel le dispositif de chauffage d'air (3) comprend au moins une unité centrale (3) comprenant au moins une source de chaleur (33) et au moins un moyen de génération de flux (32), dans lequel l'unité centrale (31) comprend au moins une sortie chauffée (391) qui est fluidiquement reliée à la région d'assemblage (2) par au moins un conduit d'air (35,36), dans lequel, en particulier, l'unité centrale (31) est agencée à l'extérieur de la première (11) et/ou de la seconde section de pale (12), en particulier au niveau d'une section de pied (16) de la première (11) et/ou de la seconde section de pale (12).

4. Procédé selon l'une des revendications 1 à 3, dans lequel le procédé comprend l'étape ff1) la recirculation d'un flux d'air depuis les espaces creux internes de la première (11) et/ou de la seconde section de pale (12) dans la région d'assemblage (2) de retour vers le dispositif de chauffage d'air (3) en tant que flux d'air recirculé, le réchauffement du flux d'air recirculé et sa réinjection en tant que flux d'air réchauffé aux espaces creux internes de la première (11) et/ou de la seconde section de pale (12) dans la région d'assemblage (2),
dans lequel, en particulier, l'unité centrale (31) du dispositif de chauffage d'air (3) comprend une entrée de recirculation (392) qui est fluidiquement reliée à l'espace creux interne de la région d'assemblage (2) et adaptée pour recevoir le flux d'air recirculé,
et dans lequel, en particulier, l'étape ff1) est réalisée en continu pendant l'étape ff).

5. Procédé selon l'une des revendications 1 à 4, dans lequel le flux d'air chauffé fourni par le dispositif de chauffage d'air (3) à l'étape ff) comprend au moins partiellement un flux d'air ambiant chauffé, et
dans lequel, en particulier, le flux d'air chauffé fourni par le dispositif de chauffage d'air (3) à l'étape ff) comprend en outre le flux d'air réchauffé, dans lequel, en particulier, un rapport entre le flux d'air ambiant chauffé et le flux d'air réchauffé est ajustable.

6. Procédé selon la revendication 5, dans lequel le dispositif de chauffage d'air (3) comprend au moins une vanne de recirculation qui est adaptée pour un ajustement, en particulier un ajustement continu, du rapport entre le flux d'air ambiant chauffé et le flux d'air réchauffé.

7. Procédé selon l'une des revendications 1 à 6, dans lequel le procédé comprend l'étape g) après que la résine durcissable a durci jusqu'à un niveau souhaité, la réalisation d'un cycle de refroidissement, dans lequel la réalisation du cycle de refroidissement comprend : l'introduction, avec le dispositif de chauffage d'air (3), d'un flux d'air non chauffé dans les espaces creux internes de la première (11) et/ou de la seconde section de pale (12) dans la région d'assemblage (2), dans lequel le flux d'air non chauffé est en particulier un flux d'air aspiré directement depuis l'environnement.

8. Procédé selon l'une des revendications 1 à 7, dans lequel la première (11) et la seconde section de pale (12) sont des sections divisées longitudinalement (L), dans lequel la première section de pale (11) est une section de pale intérieure (11) et la seconde section de pale (12) est une section de pale extérieure (12), dans lequel, en particulier, à l'étape f1), un bouchon d'étanchéité intérieur (51) est placé dans une région de la section de pale intérieure (11) qui est voisine de la région d'assemblage (2) sur un côté longitudinalement (L) intérieur et un bouchon d'étanchéité extérieur (52) est placé dans une région de la section de pale extérieure (12) qui est voisine de la région d'assemblage (2) au niveau d'un côté longitudinalement extérieur.

9. Procédé selon la revendication 8, dans lequel le bouchon d'étanchéité extérieur (52) et/ou intérieur (51) comprend deux sous-bouchons d'étanchéité séparés (511, 512, 521,522) qui épousent la forme d'une section transversale interne des chambres internes (131,141) des sections de pale (11,12) définies par la paroi de séparation interne (15) et/ou dans lequel le bouchon d'étanchéité intérieur (51) est disposé dans une région proche d'une section de pied (16) de la section de pale intérieure (11) sous la forme d'un bouchon d'étanchéité intérieur d'un seul tenant (51).

10. Procédé selon l'une des revendications 1 à 9, dans lequel le procédé comprend l'étape b2) le placement d'au moins un mandrin d'assemblage (4) à l'intérieur de la première (11) et de la seconde section de pale (12) au moins dans la région d'assemblage (2), dans lequel le mandrin d'assemblage (4) comprend au moins une ouverture (41) qui forme un passage d'écoulement pour le flux d'air chauffé, dans lequel, en particulier, le mandrin d'assemblage (4) comprend au moins une ouverture supplémentaire qui forme un passage d'écoulement pour le flux d'air recirculé.

11. Procédé selon l'une des revendications 1 à 10, dans lequel l'étape de chauffage à l'étape f) comprend le chauffage de régions limites (21,22) de la première (11) et/ou de la seconde section de pale (12) directement contiguës à la région d'assemblage (2).

12. Procédé selon l'une des revendications 1 à 11, dans lequel le procédé comprend l'étape fff) le placement d'un dispositif de chauffage externe (6) sur une surface externe de la première (11) et/ou de la seconde section de pale (12) au moins dans la région d'assemblage (2), dans lequel le dispositif de chauffage externe (6) comprend une pluralité de zones de chauffage (62-69), dans lequel une puissance de chauffage dans les zones de chauffage (62-69) est commandée individuellement.

13. Procédé selon la revendication 12, dans lequel le dispositif de chauffage externe (6) comprend au moins un dispositif de chauffage à contact (71-76) et/ou dans lequel les zones de chauffage commandées individuellement (62-69) sont réparties autour de la région d'assemblage (2) dans une direction circonférentielle (C) et/ou longitudinale (L).

14. Utilisation d'un dispositif de chauffage d'air (3) dans un procédé d'assemblage d'au moins deux sections (11,12) d'une pale d'éolienne (1) selon l'une quelconque des revendications précédentes.

15. Utilisation d'un dispositif de chauffage externe (6) dans un procédé d'assemblage d'au moins deux sections (11,12) d'une pale d'éolienne (1) selon la revendication 12 ou 13, dans laquelle le dispositif de chauffage externe (6) comprend une pluralité de zones de chauffage (62-69), dans laquelle la puissance de chauffage dans les zones de chauffage (62-69) est commandée individuellement.
